# EUROPÄISCHE PATENTSCHRIFT

(11) **EP 0 893 635 B1**
(45) Veröffentlichungstag und Bekanntmachung des Hinweises auf die Patenterteilung: **23.04.2003**
(21) Anmeldenummer: 98109058.2
(22) Anmeldetag: 19.05.1998
(51) Int. Cl.: F16K 31/06

(54) **Elektromagnetventileinrichtung**
Solenoid valve device
Dispositif d'électrovanne

(30) Priorität: 22.07.1997 DE 19731402
(43) Veröffentlichungstag der Anmeldung: 27.01.1999
(73) Patentinhaber: WABCO GmbH & Co. OHG, 30453 Hannover (DE)
(72) Erfinder: Teichmann, Andreas, 30916 Isernhagen (DE)
(74) Vertreter: Schrödter, Manfred, Dipl.-Ing.

(56) Entgegenhaltungen:
- DE-A- 2 016 030
- DE-A- 2 135 047
- DE-U- 1 952 272
- FR-A- 2 161 234
- GB-A- 1 450 402
- US-A- 2 991 799

## Beschreibung

Die Erfindung betrifft eine Elektromagnetventileinrichtung gemäß dem Oberbegriff des Patentanspruchs 1.

Eine gattungsgemäße Elektromagnetventileinrichtung ist aus der DE- A- 20 16 030 bekannt. Die Elektromagnetventileinrichtung besteht aus zwei innerhalb einer Spule hintereinander angeordneten Ankern, welche die beweglichen Ventilglieder bilden. Die beiden Anker werden in Messinghülsen geführt. Zwischen Spule und Messinghülsen ist ein relativ starkwandiges, topfförmiges Kernrohr aus magnetisch leitendem Material angeordnet. Das Kernrohr ist durch zwei Zwischenringe aus antimagnetischem Material unterbrochen.Bei Bestromung der Spule bewegen sich die beiden Anker in dem Sinne, daß die durch die Zwischenringe gebildeten Luftspalte im Kernrohr von den Ankern überbrückt werden.Nachteilig an der bekannten Ventileinrichtung ist das durch das starkwandige Kernrohr erhöhte Gewicht.

Weiter ist aus der US- A- 2,991,799 eine Ventileinrichtung bekannt, bei der zwei nadelförmige Anker in einer Linie innerhalb einer gemeinsamen Spule angeordnet sind. Bei Bestromung der Spule bewegen sich die beiden nadelförmigen Anker nach innen. Das Ventil ist zur Steuerung des Zylinders eines Fluid-Motors vorgesehen.

Eine weitere Elektromagnetventileinrichtung ist aus der DE-PS 21 35 047 bekannt.

Diese weitere bekannte Elektromagnetventileinrichtung besteht im wesentlichen aus zwei Ventilen und einer Elektromagneteinrichtung zum Betätigen der beiden Ventile. Die Elektromagneteinrichtung weist zwei Anker, eine Spule und einen Kern auf. Das erste Ventil ist als 3/2-Wegeventil ausgebildet, über welches ein Verbraucher wahlweise mit einer Druckmittelquelle oder mit einer Druckmittelsenke verbindbar ist. Das zweite Ventil, welches als eine schaltbare Drosseleinrichtung ausgebildet ist, ist dem ersten Ventil vorgeschaltet.

In einer ersten Schaltstellung des ersten Ventils und des zweiten Ventils gelangt Druckmittel von der Druckmittelquelle durch einen großen Durchlaßquerschnitt des zweiten Ventils und das erste Ventil ungedrosselt zum Verbraucher.

In einer zweiten Schaltstellung des ersten Ventils und des zweiten Ventils ist der Verbraucher mittels des ersten Ventils gegen die Druckmittelquelle abgesperrt und mit der Druckmittelsenke verbunden. Über einen kleinen Durchlaßquerschnitt des zweiten Ventils gelangt dann Druckmittel von der Druckmittelquelle gedrosselt zum Druckmitteleingang des ersten Ventils. Werden die beiden Ventile wieder umgeschaltet, wobei das zweite Ventil verzögert in seine erste Schaltstellung zurückgelangt, strömt Druckmittel von der Druckmittelquelle gedrosselt zum Verbraucher. Sobald auch das zweite Ventil in seine erste Schaltstellung zurückgekehrt ist, strömt Druckmittel von der Druckmittelquelle ungedrosselt zum Verbraucher.

Diese bekannte Elektromagnetventileinrichtung weist einen einfachen und kompakten Aufbau auf. Sie läßt sich jedoch, ohne zusätzliche Maßnahmen, nur zum Steuern des Druckes in einem einzigen Verbraucher verwenden.

Der Erfindung liegt die Aufgabe zugrunde, eine einfache Elektromagnetventileinrichtung der eingangs erwähnten-Art zu schaffen, mit der es möglich ist, zwei Verbraucher sowohl mit einer Druckmittelquelle zu verbinden als auch die beiden Verbraucher gegen die Druckmittelquelle abzusperren.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Elektromagnetventileinrichtung zu erhalten, die gegenüber der Elektromagnetventileinrichtung gemäß dem angegebenen Stand der Technik mehr Funktionen erfüllt und trotzdem einen einfachen und kompakten Aufbau aufweist.

Ein besonderer Vorteil der erfindungsgemäßen Elektromagnetventileinrichtung besteht darin, daß zwei Verbraucher nicht nur wahlweise mit einer Druckmittelquelle oder mit einer Druckmittelsenke verbunden oder gegen beide abgesperrt werden können, sondern daß zusätzlich auch die beiden Verbraucher gegeneinander absperrbar sind.

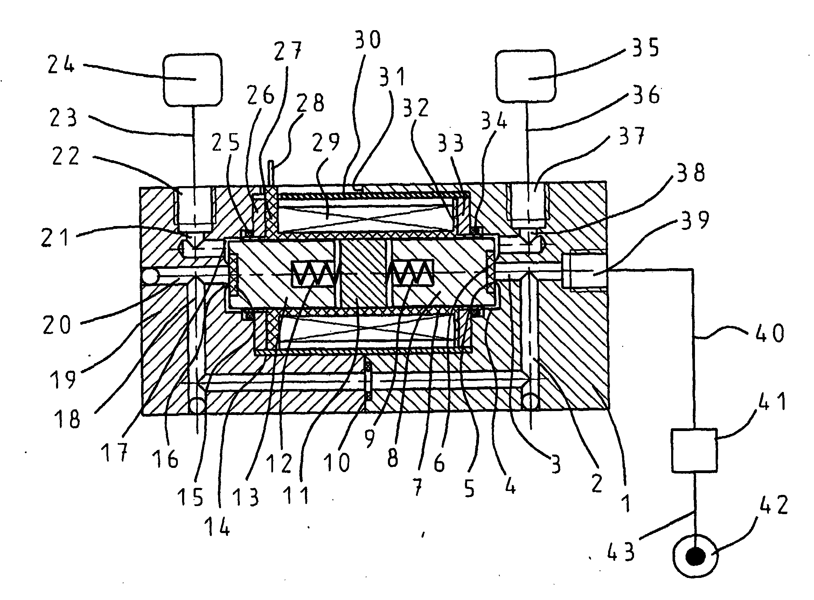

Anhand der Zeichnung wird nachfolgend ein Ausführungsbeispiel der Erfindung näher erläutert.

In der Abbildung ist eine in einer mit Druckmittel arbeitenden Anlage angeordnete Elektromagnetventileinrichtung mit zwei Ventilen und einer Elektromagneteinrichtung zum Betätigen der beiden Ventile dargestellt, wobei das zweite Ventil dem ersten Ventil parallelgeschaltet ist.

Gemäß der Abbildung sind in einem Gehäuse (1, 19), welches aus einem ersten Gehäuseteil (1) und einem zweiten Gehäuseteil (19) besteht, die mittels nicht dargestellter Verbindungsmittel, wie z. B. Schrauben, miteinander verbunden sind, ein erstes Ventil (5, 6, 8) und ein zweites Ventil (16, 15, 13) angeordnet. Das erste Ventil (5, 6, 8) wird von einem am Boden des ersten Gehäuseteiles (1) angeordneten ersten ringför- migen Ventilsitz (5) und einem in Richtung auf den ersten Ventilsitz (5) zu bzw. von diesem weg bewegbar angeordneten ersten Ventilglied (6, 8) gebildet. Das zweite Ventil (16, 15, 13) wird von einem am Boden des zweiten Gehäuseteiles (19) angeordneten zweiten ring- förmigen Ventilsitz (16) und einem in Richtung auf den zweiten Ventilsitz (16) zu bzw. von diesem weg bewegbar angeordneten zweiten Ventilglied (15, 13) gebildet. Das erste Ventil (5, 6, 8) und das zweite Ventil (16, 15, 13) sind einander gegenüberliegend und wenigstens annähernd gleichachsig zueinander im Gehäuse (1, 19) angeordnet.

Das erste Ventilglied (6, 8) wird von einem ersten Anker (8) aus einem magnetisch leitenden Material und einem Dichtkörper (6) gebildet, der an der dem ersten Ventilsitz (5) zugewandten Seite des ersten Ankers (8) angeordnet ist. Ebenso wird das zweite Ventilglied (15, 13) von einem zweiten Anker (13) aus einem magnetisch leitenden Material und einem Dichtkörper (15) gebildet, der an der dem zweiten Ventilsitz (16) zugewandten Seite des zweiten Ankers (13) angeordnet ist. Die beiden Anker (8 und 13) sind wenigstens annähernd gleichachsig zueinander und wenigstens annähernd gleichachsig zu den beiden Ventilen (5, 6, 8 und 16, 15, 13) bzw. zu den beiden Ventilsitzen (5 und 16) angeordnet. Die Dichtkörper (6 und 15) können z. B. aus Kunststoff oder Gummi bestehen. Die so zwischen dem ersten Ventilsitz (5) und dem zweiten Ventilsitz (16) der beiden Ventile (5, 6, 8 und 16, 15, 13) angeordneten Anker (8 und 13) werden in einem Ankerführungsrohr (7) gleitend geführt.

Das Ankerführungsrohr (7) ist Bestandteil eines Spulenträgers (7, 32, 27), der aus dem besagten Ankerführungsrohr (7) und zwei sich radial nach außen erstrekkenden umlaufenden Vorsprüngen (32 und 27) des Ankerführungsrohres (7) besteht, die im Bereich der Enden des Ankerführungsrohres (7) an diesem angeordnet sind. Der Spulenträger (7, 32, 27) besteht aus einem magnetisch nicht leitenden Material, wie z. B. Kunststoff. Auf dem Ankerführungsrohr (7) ist im Bereich zwischen den beiden umlaufenden Vorsprüngen (32 und 27) eine Spule (29) -Spulenwicklung- angeordnet, welche den Spulenträger (7, 32, 27) und somit auch das Ankerführungsrohr (7) und die beiden Anker (8 und 13 ) auf wenigstens einem Teil ihrer axialen Erstreckung umgibt. Zwischen den einander zugewandten Seiten der beiden Anker (8 und 13) ist in dem Ankerführungsrohr (7) ein Kern (11) aus einem magnetisch leitenden Material angeordnet. Zwischen dem Kern (11) und dem ersten Anker (8) ist eine als eine Rückstellkraft für das erste Ventilglied (6, 8) dienende erste Feder (9) angeordnet, die sich mit ihrem einen Ende am Kern (11) abstützt und mit ihrem anderen Ende den ersten Anker (8) in Richtung auf den ersten Ventilsitz (5) zu beaufschlagt. Ebenso ist zwischen dem Kern (11) und dem zweiten Anker (13) eine als Rückstellkraft für das zweite Ventilglied (15, 13) dienende zweite Feder (12) angeordnet, die sich mit ihrem einen Ende am Kern (11) abstützt und mit ihrem anderen Ende den zweiten Anker (13) in Richtung auf den zweiten Ventilsitz (16) zu beaufschlagt.

Der Spulenträger (7, 32, 27) mit Spule (29) ist in einem rohrförmigen Körper aus einem magnetisch leitenden Material angeordnet, wobei der rohrförmige Körper als äußeres Leitelement (30), das heißt, als Außenjoch zum Leiten der Magnetfelder dient.

Auf der dem ersten Ventil (5, 6, 8) zugewandten Seite des Spulenträgers (7,32,27) ist ein erstes ringscheibenförmig ausgebildetes weiteres äußeres Leitelement (33) aus einem magnetisch leitenden Material angeordnet und auf der dem zweiten Ventil (16,15,13) zugewandten Seite des Spulenträgers (7,32,27) ist ein zweites ringscheibenförmig ausgebildetes weiteres äußeres Leitelement (26) aus einem magnetisch leitenden Material angeordnet. Die ringscheibenförmig ausgebildeten äußeren Leitelemente (33 und 26) sind so bemessen, daß sie mit ihren äußeren Ringflächen an der Innenwand des rohrförmigen Leitelementes (30) und mit ihren inneren Ringflächen an der äußeren Mantelfläche des Ankerführungsrohres (7) anliegen. Die Spule (29), das Ankerführungsrohr (7), der Kern (11), die beiden Anker (8 und 13) sowie das rohrförmige Leitelement (30) und die beiden ringscheibenförmig ausgebildeten Leitelemente (33 und 26) bilden eine Elektromagneteinrichtung (29, 7, 8, 13, 33, 26, 11) zum gleichzeitigen Betätigen der beiden Ventile (5, 6, 8 und 16, 15, 13).

Die Elektromagneteinrichtung (29, 7, 8, 13, 33, 26, 11) ist in einer Ausnehmung (14) des Gehäuses (1, 19) wenigstens annähernd spielfrei angeordnet. An dem zweiten umlaufenden Vorsprung (27) des Spulenträgers (7, 32, 27) sind zwei elektrische Kontaktelemente (28) angeordnet, die sich durch eine Öffnung (31) in der Wand des Gehäuses (1, 19) hindurch aus dem Gehäuse (1, 19) heraus erstrecken. Die Kontaktelemente (28), von denen in der Zeichnung nur eines dargestellt ist, dienen zur elektrischen Verbindung der Spule (29) mit einer außerhalb des Gehäuses (1, 19) gelegenen elektrischen Einrichtung, z. B. einer Spannungsquelle und einem Schalter, die hier nicht gezeigt ist.

Das dem ersten Ventil (5, 6, 8) zugewandte Ende des Ankerführungsrohres (7) erstreckt sich in eine den Ventilsitz (5) des ersten Ventils (5, 6, 8) enthaltende Ausnehmung im Boden des ersten Gehäuseteiles (1) hinein. Ein Dichtring (34), der einerseits an der äußeren Mantelfläche des Ankerführungsrohres (7) und andererseits an der die Ausnehmung begrenzten Wand dichtend anliegt, dichtet einen von der Ausnehmung gebildeten Raum (4) gegen die die Elektromagneteinrichtung (29, 7, 8, 13, 33, 26, 11) aufnehmende Ausnehmung (14) des Gehäuses (1, 19) ab. An den Raum (4) schließt ein Gehäusekanal an, der als Druckmittelausgang (38) für das erste Ventil (5, 6, 8) dient. Ein weiterer Gehäusekanal, der mit dem ringförmigen ersten Ventilsitz (5) verbunden ist, dient als Druckmitteleingang (3) für das erste Ventil (5, 6, 8).

Das dem zweiten Ventil (16, 15, 13) zugewandte Ende des Ankerführungsrohres (7) erstreckt sich in eine den Ventilsitz (16) des zweiten Ventils (16, 15, 13) enthaltende Ausnehmung im Boden des zweiten Gehäuseteiles (19) hinein. Ein Dichtring (25), der einerseits an der äußeren Mantelfläche des Ankerführungsrohres (7) und andererseits an der die Ausnehmung begrenzenden Wand dichtend anliegt, dichtet einen von der Ausnehmung gebildeten Raum (17) gegen die Ausnehmung (14) des Gehäuses (1, 19) ab. An den Raum (17) schließt ein als Druckmittelausgang (21) für das zweite Ventil (16, 15, 13) dienender Gehäusekanal an. Ein weiterer Gehäusekanal, der mit dem ringförmigen zweiten Ventilsitz (16) verbunden ist, dient als Druckmitteleingang (20) für das zweite Ventil (16, 15, 13). Eine als Gehäusekanal ausgebildete Druckmittelleitung (2, 18) verbindet den Druckmitteleinang (3) des ersten Ventils (5, 6, 8) mit dem Druckmitteleingang (20) des zweiten Ventils (16, 15, 13). Die Druckmittelleitung (2, 18) besteht aus einem im ersten Gehäuseteil (1) angeordneten ersten Teilkanal (2) und einem im zweiten Gehäuseteil (19) angeordneten zweiten Teilkanal (18). Die Verbindungsstelle für die beiden Teilkanäle (2 und 18) ist von einem Dichtring (10) umgeben, so daß das Druckmittel weder unkontrolliert zur Atmosphäre hin noch unkontrolliert in den Gehäuseinnenraum gelangen kann.

Der Druckmitteleingang (3) des ersten Ventils (5, 6, 8) ist über einen ersten Druckmittelanschluß (39) des Gehäuses (1, 19) und eine Druckmittelleitung (40) mit dem Druckmittelausgang eines z. B. elektromagnetisch betätigbaren 3/2-Wegeventils (41) verbunden. Der Druckmitteleingang des 3/2-Wegeventils (41) steht über eine Druckmittelleitung (43) mit einem als Druckmittelquelle dienenden Druckluft-Vorratsbehälter (42) in Verbindung. Der Druckmittelausgang (38) des ersten Ventils (5, 6, 8) ist über einen zweiten Druckmittelanschluß (37) des Gehäuses (1, 19) und eine an diesen angeschlossene Druckmittelleitung (36) mit einer Druckmittelkammer (35) eines ersten Verbrauchers verbunden. Eine Druckmittelkammer (24) eines zweiten Verbrauchers steht über eine Druckmittelleitung (23) und einen mit dieser verbundenen dritten Druckmittelanschluß (22) des Gehäuses (1, 19) mit dem Druckmittelausgang (21) des zweiten Ventils (16, 15, 13) in Verbindung.

Die Funktion der im Vorstehenden beschriebenen Elektromagnetventileinrichtung wird nachfolgend näher erläutert.

Gemäß der Abbildung befinden sich das erste Ventil (5, 6, 8) und das zweite Ventil (16, 15, 13) in ihrer Schließstellung, in welcher die Ventilglieder (6, 8 und 15, 13) durch die Kraft der ihnen zugeordneten Federn (9 bzw. 12) auf den ihnen zugeordneten Ventilsitzen (5 bzw. 16) gehalten werden. Der zweite Druckmittelanschluß (37) und der dritte Druckmittelanschluß (22)sind so gegeneinander und gegen den ersten Druckmittelanschluß (39) abgesperrt. Demzufolge sind auch die Druckmittelkammern (35 und 24) der beiden Verbraucher mittels der beiden Ventile (5, 6, 8 und 16, 15, 13) gegeneinander und gegen den ersten Druckmittelanschluß (39) des Gehäuses (1, 19) abgesperrt. Das 3/2-Wegeventil (41) befindet sich in einer Schaltstellung, in welcher es den Druckluft-Vorratsbehälter (42) gegen den ersten Druckmittelanschluß (39) des Gehäuses (1, 19) der Elektromagnetventileinrichtung absperrt und den ersten Druckmittelanschluß (39) mit einer Druckmittelsenke (Atmosphäre) verbindet.

Die miteinander und mit dem ersten Druckmittelanschluß (39) verbundenen Druckmitteleingänge (3 und 20) der beiden Ventile (5, 6, 8 und 16, 15, 13) stehen somit mit der Druckmittelsenke in Verbindung.

Soll die Druckluftmenge in den Druckmittelkammern (35 und 24) der Verbraucher verringert werden, wird über eine nicht dargestellte elektrische Schalteinrichtung eine Spannung an die elektrischen Kontaktelemente (28) der Elektromagneteinrichtung (29, 7, 8, 13, 33, 26, 11) angelegt. Das sich dann aufbauende Magnetfeld bewirkt, daß sich der als Ventilglied (8, 6) für das erste Ventil (5, 6, 8) dienende erste Anker (8) gegen die Kraft der ersten Feder (9) vom ersten Ventilsitz (5) und der als Ventilglied (13, 15) für das zweite Ventil (16, 15, 13) dienende zweite Anker (13) sich gegen die Kraft der zweiten Feder (12) vom zweiten Ventilsitz (16) weg bewegen. Der zweite Druckmittelanschluß (37) und der dritte Druckmittelanschluß (22) sind über die dann geöffneten beiden Ventile (5,6,8 und 16,15,13) miteinander und mit dem ersten Druckmittelanschluß (39) verbunden. Druckluft aus der Druckmittelkammer (35) des ersten Verbrauchers strömt durch das erste Ventil (5, 6, 8), den ersten Druckmittelanschluß (39), die Druckmittelleitung (40) und das geöffnete Auslaßventil des 3/2-Wegeventils (41) zur Atmosphäre hin ab. Gleichzeitig strömt Druckluft aus der Druckmittelkammer (24) des zweiten Verbrauchers durch das zweite Ventil (16, 15, 13) und die Druckmittelleitung (18, 2) zum ersten Druckmittelanschluß (39), von welchem es durch die Druckmittelleitung (40) und das geöffnete Auslaßventil des 3/2-Wegeventils (41) zur Atmosphäre hin abströmt.

Soll der Druckluftabbau beendet werden, wird die elektrische Schalteinrichtung in der Weise betätigt, daß die elektrische Spannung an den elektrischen Kontaktelementen (28) der Elektromagneteinrichtung (29, 7, 8, 13, 33, 26, 11) abfällt. Das Magnetfeld der Elektromagneteinrichtung (29, 7, 8, 13, 33, 26, 11) baut sich dann ab. Die auf den ersten Anker (8) einwirkende Kraft der ersten Feder (9) und die auf den zweiten Anker (13) einwirkende Kraft der zweiten Feder (12) bewirken dann, daß die beiden als Ventilglieder (6, 8 und 15, 13) dienenden Anker (8 und 13) sich in Richtung auf die ihnen zugeordneten Ventilsitze (5 und 16) zu bewegen und an diesen zur Anlage kommen. Das erste Ventil (5, 6, 8) und das zweite Ventil (16, 15, 13) befinden sich dann wieder in ihrer Schließstellung. Die Druckmittelkammern (35 und 24) der beiden Verbraucher sind dann wieder gegeneinander und gegen die Atmosphäre abgesperrt.

Soll in die Druckmittelkammern (35 und 24) der beiden Verbraucher Druckluft eingesteuert werden, wird das 3/2-Wegeventil (41) in der Weise umgeschaltet, daß es den Druckmittelanschluß (39) und somit die Druckmitteleingänge (3 und 20) der beiden Ventile (5, 5, 8 und 16, 15, 13) gegen die Atmosphäre absperrt und mit dem Druckluft-Vorratsbehälter (42) verbindet. Druckluft aus dem Druckluft-Vorratsbehälter (42) strömt durch das dann geöffnete Einlaßventil des 3/2-Wegeventils (41) zum ersten Druckmittelanschluß (39) des Gehäuses (1, 19) und von diesem zum Druckmitteleingang (3) des ersten Ventils (5, 6, 8). Durch die die Druckmitteleingänge (3 und 20) der beiden Ventile (5, 6, 8 und 16, 15, 13) miteinander verbindende Druckmittelleitung (2, 18) gelangt gleichzeitig Druckluft vom Druckmitteleingang (3) des ersten Ventils (5, 6, 8) zum Druckmitteleingang (20) des zweiten Ventils (16, 15, 13). Wird dann auf die Spule (29) der Elektromagneteinrichtung (29, 7, 8, 13, 33, 26, 11) eine Spannung gegeben, werden die beiden als Ventilglieder (8, 6 und 13, 15) dienenden Anker (8 und 13) durch die Kraft des sich dann aufbauenden Magnetfeldes in der Weise beeinflußt, daß sie sich gegen die Kraft der ihnen zugeordneten Federn (9 bzw. 12) in Richtung von den ihnen zugeordneten Ventilsitzen (5 bzw. 16) weg bewegen. Durch das dann geöffnete erste Ventil (5, 6, 8) gelangt Druckluft vom ersten Druckmitteleingang (3) zum ersten Druckmittelausgang (38) und von diesem weiter in die Druckmittelkammer (35) des ersten Verbrauchers. Gleichzeitig gelangt Druckluft vom Druckmitteleingang (20) des zweiten Ventils (16, 15, 13) durch das geöffnete zweite Ventil (16, 15, 13) zum zweiten Druckmittelausgang (21) und von diesem weiter in die Druckmittelkammer (24) des zweiten Verbrauchers.

Ist die gewünschte Druckluftmenge in die Druckmittelkammern (35 und 24) der beiden Verbrauchern eingesteuert, wird die Spannung von der Elektromagneteinrichtung (29, 7, 8, 13, 33, 26, 11) und vom 3/2-Wegeventil (41) weggenommen. Durch die Kraft der ersten Feder (9) wird das erste Ventilglied (8, 6) an dem ihm zugeordneten ersten Ventilsitz (5) zur Anlage gebracht. Gleichzeitig wird das zweite Ventilglied (13, 15) durch die Kraft der zweiten Feder (12) an dem ihm zugeordneten zweiten Ventilsitz (16) zur Anlage gebracht. Das erste Ventil (5, 6, 8) und das zweite Ventil (16, 15, 13) der Elektromagnetventileinrichtung befinden sich dann in ihrer Schließstellung. Die Druckmittelkammer (35) des ersten Verbrauchers und die Druckmittelkammer (24) des zweiten Verbrauchers sind dann gegeneinander und gegen den ersten Druckmittelanschluß (39) des Gehäuses (1, 19) und somit gegen den Druckluft-Vorratsbehälter (42) abgesperrt.

Das 3/2-Wegeventil (41) ist annähernd gleichzeitig mit den vorstehend beschriebenen Vorgängen umgeschaltet worden, und zwar in der Weise, daß es den ersten Druckmittelanschluß (39) des Gehäuses (1, 19) und somit die Druckmitteleingänge (3 und 20) der beiden Ventile (5, 6, 8 und 1, 15, 13) gegen den Druckluft-Vorratsbehälter (42) absperrt und mit der Atmosphäre verbindet.

Die Elektromagnetventileinrichtung hat eine Doppelfunktion. Einerseits können mit ihr die Druckmittelkammern von zwei Verbrauchern gleichzeitig mit einem Druckmittel befüllt werden oder die Druckmittelmenge in den Druckmittelkammern der beiden Verbraucher kann gleichzeitig verringert werden. Andererseits werden die Druckmittelkammern der beiden Verbraucher gegeneinander und gegen die Druckmittelquelle bzw. gegen die Druckmittelsenke abgesperrt, wenn keine Änderung der Druckmittelmenge in den Druckmittelkammern der Verbraucher gewünscht wird.

Bei der erfindungsgemäßen Elektromagnetventileinrichtung können in der äußeren Mantelfläche des Kerns und gegebenenfalls auch in der äußeren Mantelfläche der Anker oder in der Wand des Ankerführungsrohres in Richtung der Längsachse dieser Bauelemente verlaufende Ausnehmungen angeordnet werden, welche die Funktion von Drosselbohrungen haben. Mittels derartiger Drosselbohrungen wird bewirkt, daß über einen längeren Zeitraum gesehen ein Druckausgleich zwischen den Druckmittelkammern der beiden Verbraucher stattfindet, jedoch kurzzeitig auftretende Druckänderungen in der einen der beiden Druckmittelkammern nicht zum Druckausgleich führen. Die Drosselbohrungen können auch von den Kern und gegebenenfalls die Anker durchdringenden Bohrungen mit sehr kleinem Querschnitt gebildet werden.

Die beiden Federn (9 und 12), welche die Anker (8 und 13) in Schließrichtung der ihnen zugeordneten Ventile (5, 6, 8 und 16, 15, 13) beaufschlagen, können sich direkt oder indirekt, d. h. über ein Zwischenstück, am Kern (11) oder der Kunststoffwand abstützen.

Die Federn (9 und 12) können sich auch außerhalb der Spule (29) an den umlaufenden Vorsprüngen (32, 27) des Spulenträgers (7, 27, 32) abstützen und an den Ankern (8, 13) dann anzuordnende Bünde in Richtung auf die Ventilsitze (5, 16) zu beaufschlagen.

Das rohrförmige Leitelement (30) kann auch durch ein oder mehrere bandartige oder auch stabartige Leitelemente aus einem magnetisch leitenden Material, die in Richtung der Längsachse der Spule (29) verlaufend an der äußeren Mantelfläche der Spule (29) angeordnet sind, ersetzt werden.

Gemäß der Erfindung ist es auch möglich, das rohrförmige Leitelement (30) und das eine der ringscheibenförmig ausgebildeten Leitelemente (33 bzw. 26) durch ein topfförmig ausgebildetes Leitelement zu ersetzen, welches dann zur Aufnahme der Spule (29) dient.

Es ist gemäß der Erfindung auch möglich, das Gehäuse (1, 19) der Elektromagnetventileinrichtung oder wenigstens ein die Elektromagneteinrichtung (29, 7, 8, 13, 33, 26, 11) der Elektromagnetventileinrichtung enthaltendes Gehäuse oder Gehäuseteil aus einem magnetisch leitenden Material herzustellen und die Spule (29) so im Gehäuse (1, 19) anzuordnen, daß das Gehäuse (1, 19) als Leitelement (Außenjoch) dient, welches dann den als Leitelement dienenden rohrförmigen Körper und gegebenenfalls auch die ringscheibenförmig ausgebildeten Leitelemente (33,26) ersetzt.

Die erfindungsgemäße Elektromagnetventileinrichtung kann selbstverständlich auch anders als in dem Ausführungsbeispiel dargestellt ausgebildet sein. Der Gehäusekanal zum Verbinden des Druckmitteleingangs des ersten Ventils mit dem Druckmitteleingang des zweiten Ventils kann zum Beispiel durch im Gehäuse oder außerhalb des Gehäuses angeordnete Druckmittelleitungen ersetzt werden.

Das Ankerführungsrohr kann, wie beschrieben, Teil des Spulenträgers sein, es kann aber auch von einem separaten rohrförmigen Körper gebildet werden, der in den Spulenträger eingesetzt wird.

Die bewegbaren Ventilglieder der beiden Ventile (5, 6, 8 und 16, 15, 13) können von den beiden Ankern (8 und 13) gebildet werden, wobei die Anker (8 und 13) dann vorteilhafterweise einen Dichtkörper (6 bzw. 15) tragen. Auf die Anordnung von Dichtkörpern an den Ankern kann verzichtet werden, wenn entweder die Ventilsitze mit einem für eine Abdichtung geeigneten Material versehen sind oder aus einem derartigen Material bestehen oder wenn die bewegbaren Ventilglieder als separate Bauteile ausgebildet lediglich derart mit den Ankern in Wirkverbindung stehen oder in Wirkverbindung bringbar sind, daß sie von den Ankern angetrieben werden.

Gemäß der Erfindung können die Ventile auch so ausgebildet sein, daß sie mittels Hebel, z. B. Kipphebel, betätigt werden, die von den Ankern gegen eine Rückstellkraft, z. B. Federn, angetrieben werden. Bei einer solchen Ausbildung der Ventile sind diese nicht gleichachsig zu den Ankern angeordnet.

Es ist gemäß der Erfindung auch möglich, den ersten Anker zwischen dem ihm zugeordneten Ventilsitz und dem diesem gegenüberliegenden einen Ende der Spule und den zweiten Anker zwischen dem ihm zugeordneten Ventilsitz und dem diesem gegenüberliegenden anderen Ende der Spule anzuordnen. Der Kern ist dann in Richtung seiner Längsachse so zu bemessen, daß er sich wenigstens bis nahe an die Enden der Spule heran erstreckt.

Gemäß der Erfindung kann die Magneteinrichtung auch zwei Spulen aufweisen, wobei dann je eine Spule je einem der beiden Anker zugeordnet ist. Bei einer solchen Ausbildung der erfindungsgemäßen Elektromagnetventileinrichtung können sowohl beide Ventile gemeinsam als auch unabhängig voneinander betätigt werden, so daß die beiden Verbraucher somit wahlweise gemeinsam oder unabhängig voneinander angesteuert werden können. Eine derart ausgebildete Elektromagnetventileinrichtung weist den gleichen einfachen und kompakten Aufbau auf wie die beschriebene Elektromagnetventileinrichtung, wobei lediglich jeder der beiden Anker auf wenigstens einem Teil seiner axialen Erstrekkung von der jeweils einen der beiden Spulen umgeben ist.

Von Bedeutung ist jedoch bei jeder denkbaren Ausführungsform des Erfindungsgegenstandes, daß die beiden Ventile einander gegenüberliegend und die beiden Anker zwischen den beiden Ventilen angeordnet sind (Boxeranordnung) und daß die beiden Ventile (5, 6, 8 und 16, 15, 13) so ausgebildet und so angeordnet sind, daß zwei Verbraucher wahlweise mit einer Druckmittelquelle oder mit einer Druckmittelsenke verbindbar oder gegen beide absperrbar sind, wobei die Möglichkeit gegeben ist, daß bei diesen Vorgängen auch die beiden Verbraucher miteinander verbunden bzw. gegeneinander abgesperrt werden.

Die erfindungsgemäße Elektromagnetventileinrichtung kann in allen Einrichtungen und Anlagen, die mit einem Druckmitttel, wie z. B. Druckluft oder Hydrauliköl, arbeiten, betrieben werden.

Die die Druckmittelkammern aufweisenden Verbraucher können z. B. Arbeitszylinder oder Tragelemente sein, mittels welcher eine Last abgestützt ist, deren Höhenlage veränderbar sein soll.

Als gegeneinander abgesperrt gelten bei Verwendung der erfindungsgemäßen Elektromagnetventileinrichtung die Verbraucher auch dann, wenn die beiden Verbraucher über eine Drosselöffnung in den Ankern, im Kern oder im Ankerführungsrohr bei geschlossenem ersten Ventil und geschlossenem zweiten Ventil miteinander verbunden sind.

Die Druckmitteleingänge der beiden Ventile können, wie im Ausführungsbeispiel angegeben, an eine gemeinsame Druckmittelquelle angeschlossen sein. Es ist gemäß der Erfindung jedoch auch möglich, jeden der beiden Druckmitteleingänge mit einer separaten Druckmittelquelle zu verbinden.

## Patentansprüche

1. Elektromagnetventileinrichtung mit folgenden Merkmalen:
a) Es ist ein erstes Ventil (5, 6, 8) mit einem ersten Ventilsitz (5) und einem ersten bewegbaren Ventilglied (6, 8) und ein zweites Ventil (16, 15, 13) mit einem zweiten Ventilsitz (16) und einem zweiten bewegbaren Ventilglied (15, 13) vorgesehen;
b) es ist ein erster Druckmitteleingang (3) und ein erster Druckmittelausgang (38) für das erste Ventil (5, 6, 8) sowie ein zweiter Druckmitteleingang (20) und ein zweiter Druckmittelausgang (21) für das zweite Ventil (16, 15, 13) vorgesehen;
c) zum Betätigen des ersten Ventils (5, 6, 8) und des zweiten Ventils (16, 15, 13) dient eine Elektromagneteinrichtung (8,13,29 7), die aus einem dem ersten Ventil (5, 6, 8) zugeordneten ersten Anker (8) und einem dem zweiten Ventil (16, 15, 13) zugeordneten zweiten Anker (13) sowie einer Spule (29) besteht;
d) der erste Anker (8) und der zweite Anker (13) sind wenigstens annähernd gleichachsig zueinander angeordnet;
e) der erste Anker (8) und der zweite Anker (13) sind zwischen den beiden Ventilen (5, 6, 8 und 16, 15, 13) in Richtung auf diese zu bzw. in Richtung von diesen weg bewegbar angeordnet;
f) der Druckmittelausgang (38) des ersten Ventils (5,6,8) steht mit einem ersten Verbraucher (35) in Verbindung und der Druckmittelausgang (21) des zweiten Ventils (16,15,13) steht mit einem zweiten Verbraucher in Verbindung;
g) zwischen den einander-zugewandten Seiten der beiden Anker (8 und 13) ist ein Kern (11) aus einem magnetisch leitenden Material angeordnet;
h) die beiden Anker (8 und 13) sind in einem Ankerführungsrohr (7) aus nichtmagnetischem Material, welches auf wenigstens einem Teil seiner axialen Erstreckung von der Spule (29) umgeben ist, in Richtung der Längsachse des Ankerführungsrohres (7) bewegbar angeordnet;
**gekennzeichnet durch** folgendes Merkmal:
i) das Ankerführungsrohr (7) ist Bestandteil eines Spulenträgers (7,32,27) aus einem magnetisch nicht leitfähigem Material.

2. Elektromagnetventileinrichtung nach Anspruch 1, **dadurch gekennzeichnet, daß** die Elektromagneteinrichtung (8, 13, 29, 7) eine weitere Spule besitzt, wobei je eine Spule je einem der beiden Anker (8 bzw. 13) zugeordnet ist.

3. Elektromagnetventileinrichtung nach wenigstens einem der vorhergehenden Ansprüche, **dadurch gekennzeichnet, daß** der Kern (11) in Richtung seiner Längsachse so bemessen ist, daß er wenigstens bis dicht an die Enden der Spule (29) heranreicht.

4. Elektromagnetventileinrichtung nach wenigstens einem der vorhergehenden Ansprüche, **dadurch gegekennzeichnet, daß** die Spule (29) so ausgebildet und so angeordnet ist, daß sie die beiden Anker (8 und 13) auf wenigstens einem Teil ihrer axialen Erstreckung umgibt.

5. Elektromagnetventileinrichtung nach wenigstens einem der vorhergehenden Ansprüche, **dadurch gekennzeichnet, daß** ein äußeres Leitelement (30) aus einem magnetisch leitenden Material vorgesehen ist, welches am Außenumfang der Spule (29) in Richtung der Längsachse der Spule (29) verläuft.

6. Elektromagnetventileinrichtung nach wenigstens einem der vorhergehenden Ansprüche, **dadurch gekennzeichnet, daß** an wenigstens einer Stirnseite der Spule (29) ein weiteres äußeres Leitelement (33, 26) aus einem magnetisch leitenden Material angeordnet ist, welches mit dem in Richtung der Längsachse der Spule (29) verlaufenden Leitelement (30) magnetisch leitend verbunden ist.

7. Elektromagnetventileinrichtung nach wenigstens einem der vorhergehenden Ansprüche, **gekennzeichnet durch** die folgenden Merkmale:
a) Der erste Anker (8) wird von einer ersten Feder (9) in Schließrichtung des ersten Ventils (5, 6, 8) beaufschlagt;
b) der zweite Anker (13) wird von einer zweiten Feder (12) in Schließrichtung des zweiten Ventils (16, 15, 13) beaufschlagt.

8. Elektromagnetventileinrichtung nach wenigstens einem der vorhergehenden Ansprüche, **dadurch gekennzeichnet, daß** der Druckmitteleingang (3) des ersten Ventils (5, 6, 8) über eine Druckmittelleitung (2, 18) mit dem Druckmitteleingang (20) des zweiten Ventils (16, 15, 13) verbunden ist.

9. Elektromagnetventileinrichtung nach wenigstens einem der vorhergehenden Ansprüche, **gekennzeichnet durch** die folgenden Merkmale:
a) Das erste Ventil (5, 6, 8), das zweite Ventil (16, 15, 13) sowie die beiden Anker (8 und 13) und die Spule (29) sind in einem Gehäuse (1, 19) angeordnet;
b) die Druckmittelleitung (2, 18) zur Verbindung des Druckmitteleingangs (3) des ersten Ventils (5, 6, 8) mit dem Druckmitteleingang (20) des zweiten Ventils (16, 15, 13) ist als ein im Gehäuse angeordneter Kanal ausgebildet.

10. Elektromagnetventileinrichtung nach wenigstens einem der vorhergehenden Ansprüche, **gekennzeichnet durch** die folgenden Merkmale:
a) das in Richtung der Längsachse der Spule (29) verlaufende äußere Leitelement (30) ist als ein rohrförmiger Körper ausgebildet, der koaxial zu den beiden Ankern (8 und 13) und der Spule (29) angeordnet ist und die Spule (29) umgibt;
b) das weitere äußere Leitelement (33, 26) ist als ein ringscheibenförmiger Körper ausgebildet, welcher an der einen Stirnseite der Spule (29) angeordnet und mit dem rohrförmigen Leitelement (30) magnetisch leitend verbunden ist.

11. Elektromagnetventileinrichtung nach wenigstens einem der vorhergehenden Ansprüche, **dadurch gekennzeichnet, daß** der Kern (11) und die beiden Anker (8 und 13) und / oder das Ankerführungsrohr (7)eine in Richtung ihrer Längsachse verlaufende Ausnehmung oder Bohrung aufweisen, die als Drosselbohrung dient, über welche die Druckmittelausgänge (38 und 21) der beiden Ventile (5, 6, 8 und 16, 15, 13) miteinander verbunden sind.

12. Elektromagnetventileinrichtung nach wenigstens einem der vorhergehenden Ansprüche, **dadurch gekennzeichnet, daß** das bewegbare Ventilglied des ersten Ventils (5, 6, 8) vom ersten Anker (8) und das bewegbare Ventilglied des zweiten Ventils (16, 15, 13) vom zweiten Anker (13) gebildet wird.

## Claims

1. Electromagnet valve arrangement having the following features:
a) a first valve (5, 6, 8) having a first valve seat (5) and a first movable valve member (6, 8) and a second valve (16, 15, 13) having a second valve seat (16) and a second movable valve member (15, 13) are provided;
b) a first pressure medium inlet (3) and a first pressure medium outlet (38) for the first valve (5, 6, 8) and a second pressure medium inlet (20) and a second pressure medium outlet (21) for the second valve (16, 15, 13) are provided;
c) for actuation of the first valve (5, 6, 8) and the second valve (16, 15, 13) an electromagnet arrangement (8, 13, 29, 7) is used, which consists of a first armature (8) associated with the first valve (5, 6, 8) and a second armature (13) associated with the second valve (16, 15, 13), and also a coil (29);
d) the first armature (8) and the second armature (13) are arranged at least approximately on the same axis with respect to one another;
e) the first armature (8) and the second armature (13) are arranged between the two valves (5, 6, 8 and 16, 15, 13) so as to be movable in a direction towards them or in a direction away therefrom;
f) the pressure medium outlet (38) of the first valve (5, 6, 8) is in connection with a first load (35) and the pressure medium outlet (21) of the second valve (16, 15, 13) is in connection with a second load;
g) a core (11) of a magnetically permeable material is arranged between the facing sides of the two armatures (8 and 13);
h) the two armatures (8 and 13) are arranged in an armature guide tube (7) of non-magnetic material, so as to be movable in the direction of the longitudinal axis of the armature guide tube (7), the tube being surrounded at least for part of its axial extent by the coil (29);
**characterised by** the following feature:
i) the armature guide tube (7) is part of a coil carrier (7, 32, 27) of a magnetically non-permeable material.

2. Electromagnet valve arrangement according to claim 1, **characterised in that** the electromagnet arrangement (8, 13, 29, 7) has a further coil, each coil being associated with one of the two armatures (8 and 13 respectively).

3. Electromagnet valve arrangement according to at least one of the preceding claims, **characterised in that** the core (11) is dimensioned in the direction of its longitudinal axis such that it reaches at least close up to the ends of the coil (29).

4. Electromagnet valve arrangement according to at least one of the preceding claims, **characterised in that** the coil (29) is so constructed and so arranged that it surrounds the two armatures (8 and 13) for at least part of their axial extent.

5. Electromagnet valve arrangement according to at least one of the preceding claims, **characterised in that** an outer guide element (30) of a magnetically permeable material is provided, which runs on the outer circumference of the coil (29) in the direction of the longitudinal axis of the coil (29).

6. Electromagnet valve arrangement according to at least one of the preceding claims, **characterised in that** a further outer guide element (33, 26) of a magnetically permeable material is arranged on at least one end face of the coil (29), which further guide element is magnetically permeably connected with the guide element (30) running in the direction of the longitudinal axis of the coil (29).

7. Electromagnet valve arrangement according to at least one of the preceding claims, **characterised by** the following features:
a) the first armature (8) is biased by a first spring (9) in the closing direction of the first valve (5, 6, 8);
b) the second armature (13) is biased by a second spring (12) in the closing direction of the second valve (16, 15, 13).

8. Electromagnet valve arrangement according to at least one of the preceding claims, **characterised in that** the pressure medium inlet (3) of the first valve (5, 6, 8) is connected via a pressure medium line (2, 18) to the pressure medium inlet (20) of the second valve (16, 15, 13).

9. Electromagnet valve arrangement according to at least one of the preceding claims, **characterised by** the following features:
a) the first valve (5, 6, 8), the second valve (16, 15, 13) and the two armatures (8 and 13) and the coil (29) are arranged in a housing (1, 19);
b) the pressure medium line (2, 18) for connecting the pressure medium inlet (3) of the first valve (5, 6, 8) to the pressure medium inlet (20) of the second valve (16, 15, 13) is in the form of a channel arranged in the housing.

10. Electromagnet valve arrangement according to at least one of the preceding claims, **characterised by** the following features:
a) the outer guide element (30) running in the direction of the longitudinal axis of the coil (29) is in the form of tubular body that is arranged coaxially with respect to the two armatures (8 and 13) and the coil (29) and surrounds the coil (29);
b) the further outer guide element (33, 26) is in the form of an annular disc-shaped body, which is arranged on one end face of the coil (29) and is magnetically permeably connected with the tubular guide element (30).

11. Electromagnet valve arrangement according to at least one of the preceding claims, **characterised in that**, running in the direction of their longitudinal axis, the core (11) and the two armatures (8 and 13) and/or the armature guide tube (7) have an aperture or bore, which acts as a throttling bore, via which the pressure medium outlets (38 and 21) of the two valves valve (5, 6, 8 and 16, 15, 13) are connected with one another.

12. Electromagnet valve arrangement according to at least one of the preceding claims, **characterised in that** the movable valve member of the first valve (5, 6, 8) is formed by the first armature (8) and the movable valve member of the second valve (16, 15, 13) is formed by the second armature (13).

## Revendications

1. Dispositif d'électrovalve, avec les caractéristiques suivantes :
a) il est prévu une première valve (5, 6, 8) avec un premier siège de valve (5) et un premier obturateur mobile (6, 8) et une seconde valve (16, 15, 13) avec un second siège de valve (16) et un second obturateur mobile (15, 13) ;
b) il est prévu une première arrivée de fluide sous pression (3) et une première sortie de fluide sous pression (38) pour la première valve (5, 6, 8), ainsi qu'une seconde arrivée de fluide sous pression (20) et une seconde sortie de fluide sous pression (21) pour la seconde valve (16, 15, 13) ;
c) un dispositif électromagnétique (8, 13, 29, 7), qui est composé d'un premier induit (8) associé à la première valve (5, 6, 8) et d'un second induit (13) associé à la seconde valve (16, 15, 13), ainsi que d'une bobine (29), sert à actionner la première valve (5, 6, 8) et la seconde valve (16, 15, 13) ;
d) le premier induit (8) et le second induit (13) sont disposés au moins approximativement coaxialement ;
e) le premier induit (8) et le second induit (13) sont disposés entre les deux valves (5, 6, 8 et 16, 15, 13) en pouvant être rapprochés ou éloignés de celles-ci ;
f) la sortie de fluide sous pression (38) de la première valve (5, 6, 8) est reliée à un premier utilisateur (38) et la sortie de fluide sous pression (21) de la seconde valve (16, 15, 13) est reliée à un second utilisateur ;
g) un noyau (11) composé d'un matériau magnétiquement conducteur se trouvé entre les côtés tournés l'un vers l'autre des deux induits (8 et 13) ;
h) les deux induits (8 et 13) sont disposés, à déplacement dans la direction de l'axe longitudinal du tube de guidage d'induit (7), dans un tube de guidage d'induit (7) en matériau non magnétique qui est entouré par la bobine (29) sur au moins une partie de son étendue axiale ;
**caractérisé par** la caractéristique suivante :
i) le tube de guidage d'induit (7) fait partie d'un porte-bobine (7, 32, 27) en matériau magnétiquement non conducteur.

2. Dispositif d'électrovalve selon la revendication 1, **caractérisé en ce que** le dispositif électromagnétique (8, 13, 29, 7) possède une bobine supplémentaire, les deux induits (8 ou 13) étant chacun associés à une bobine respective.

3. Dispositif d'électrovalve selon au moins une des revendications précédentes, **caractérisé en ce que** le noyau (11) est dimensionné, dans la direction de son axe longitudinal, de telle sorte qu'il parvient au moins très près des extrémités de la bobine (29).

4. Dispositif d'électrovalve selon au moins une des revendications précédentes, **caractérisé en ce que** la bobine (29) est configurée et disposée de telle sorte qu'elle entoure les deux induits (8 et 13) sur au moins une partie de son étendue axiale.

5. Dispositif d'électrovalve selon au moins une des revendications précédentes, **caractérisé en ce qu'**il est prévu un élément conducteur extérieur (30) en matériau magnétiquement conducteur, qui s'étend sur la circonférence extérieure de la bobine (29) dans la direction de l'axe longitudinal de la bobine (29).

6. Dispositif d'électrovalve selon au moins une des revendications précédentes, **caractérisé en ce qu'**un élément conducteur extérieur supplémentaire (33, 26) en matériau magnétiquement conducteur est disposé sur au moins un côté frontal de la bobine (29), élément qui est relié en conduction magnétique à l'élément conducteur (30) s'étendant dans la direction de l'axe longitudinal de la bobine (29).

7. Dispositif d'électrovalve selon au moins une des revendications précédentes, **caractérisé par** les caractéristiques suivantes :
a) le premier induit (8) est sollicité par un premier ressort (9) dans la direction de fermeture de la première valve (5, 6, 8) ;
b) le second induit (13) est sollicité par un second ressort (12) dans la direction de fermeture de la seconde valve (16, 15, 13).

8. Dispositif d'électrovalve selon au moins une des revendications précédentes, **caractérisé en ce que** l'arrivée de fluide sous pression (3) de la première valve (5, 6, 8) est reliée par l'intermédiaire d'une conduite de fluide sous pression (2, 18) à l'arrivée de fluide sous pression (20) de la seconde valve (16, 15, 13).

9. Dispositif d'électrovalve selon au moins une des revendications précédentes, **caractérisé par** les caractéristiques suivantes :
a) la première valve (5, 6, 8), la seconde valve (16, 15, 13) ainsi que les deux induits (8 et 13) et la bobine (29) sont disposés dans un boîtier (1, 19) ;
b) la conduite de fluide sous pression (2, 18), destinée à relier l'arrivée de fluide sous pression (3) de la première valve (5, 6, 8) à l'arrivée de fluide sous pression (20) de la seconde valve (16, 15, 13), est réalisée sous la forme d'un canal disposé dans le boîtier.

10. Dispositif d'électrovalve selon au moins une des revendications précédentes, **caractérisé par** les caractéristiques suivantes :
a) l'élément conducteur extérieur (30) s'étendant dans la direction de l'axe longitudinal de la bobine (29) est réalisé sous la forme d'un corps tubulaire, qui est disposé coaxialement aux deux induits (8 et 13) et à la bobine (29) et qui entoure la bobine (29) ;
b) l'élément conducteur extérieur supplémentaire (33, 26) est réalisé sous la forme d'un corps en forme de couronne, qui est disposé sur ledit côté frontal de la bobine (29) et qui est relié en conduction magnétique à l'élément conducteur tubulaire (30).

11. Dispositif d'électrovalve selon au moins une des revendications précédentes, **caractérisé en ce que** le noyau (11) et les deux induits (8 et 13) et/ou le tube de guidage d'induit (7) présentent un évidement ou perçage s'étendant dans la direction de leur axe longitudinal, qui sert d'orifice d'étranglement et par l'intermédiaire duquel les sorties de fluide sous pression (38 et 21) des deux valves (5, 6, 8 et 16, 15, 13) sont mutuellement reliées.

12. Dispositif d'électrovalve selon au moins une des revendications précédentes, **caractérisé en ce que** l'obturateur mobile de la première valve (5, 6, 8) est formé par le premier induit (8), et l'obturateur mobile de la seconde valve (16, 15, 13) est formé par le second induit (13).
